# EUROPEAN PATENT APPLICATION

(11) **EP 4 582 358 A1**
(43) Date of publication of application: **09.07.2025**
(21) Application number: 24223539.8
(22) Date of filing: 05.11.2021
(51) Int. Cl.: B65G 1/04, B65G 67/20

(54) **A DISTRIBUTION DOCK, A DISTRIBUTION SYSTEM AND A METHOD THEREOF**

(30) Priority: 11.11.2020 NO 20201217
(62) Divisional of application: 21805953.3
(71) Applicant: AutoStore Technology AS, 5578 Nedre Vats (NO)
(72) Inventor: SARASWAT, Asheesh, 5578 Nedre Vats (NO)
(74) Representative: Kilburn & Strode LLP

(57) **Abstract**

It is disclosed a distribution dock (1000) comprising:
- a dock (400) for handling and providing access to storage containers (106) of a mobile storage system (701,702,703), the dock (400) comprising a framework structure (403) of upright members (404) and a first rail system (608) arranged on the upright members (404) of the framework structure (403) comprising a set of parallel rails (410,411) arranged to guide movement of a container handling vehicle (201,301) in a direction (X,Y) across the top of the framework structure (403),
- at least one container handling vehicle (201,301) configured to operate on the first rail system (608),
- at least one interface (609) comprising a set of parallel tracks configured to connect the first rail system (608) of the dock (400) to a second rail system (708) of a mobile storage system (701,702,703) such that the container handling vehicle (201,301) can retrieve storage containers (106) from the mobile storage system (701,702,703).

Further, it is disclosed a distribution system (800) comprising such a distribution dock (1000) and at least one mobile storage system (701,702,703), including a method of operating a distribution system (800).

## Description

### FIELD OF THE INVENTION

The present invention relates to a distribution dock, in particular to a distribution dock comprising a dock for handling and providing access to storage containers of a mobile storage system. Furthermore, the invention relates to a distribution system comprising a distribution dock and a mobile storage system and a method of operating such a distribution system.

### BACKGROUND AND PRIOR ART

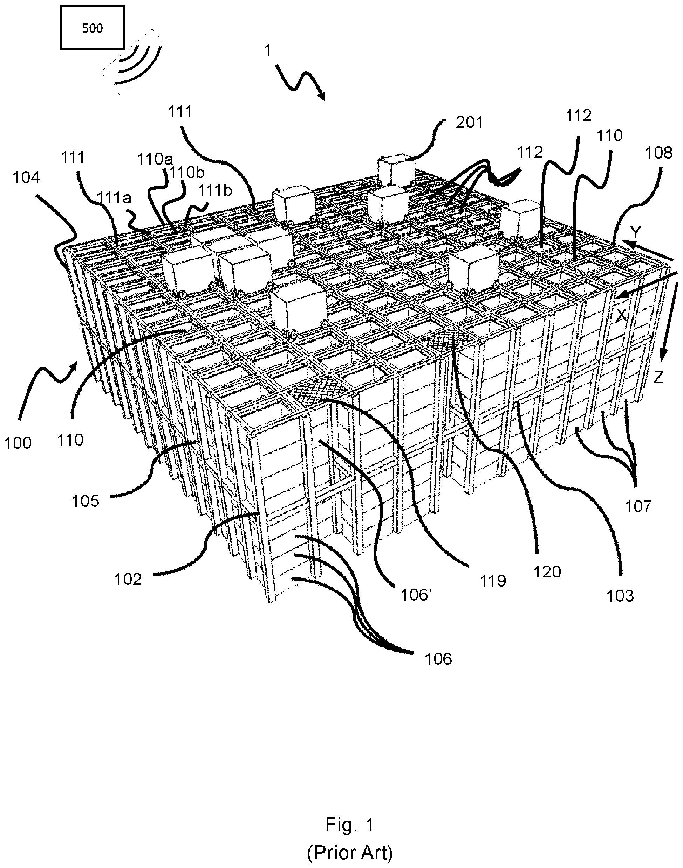

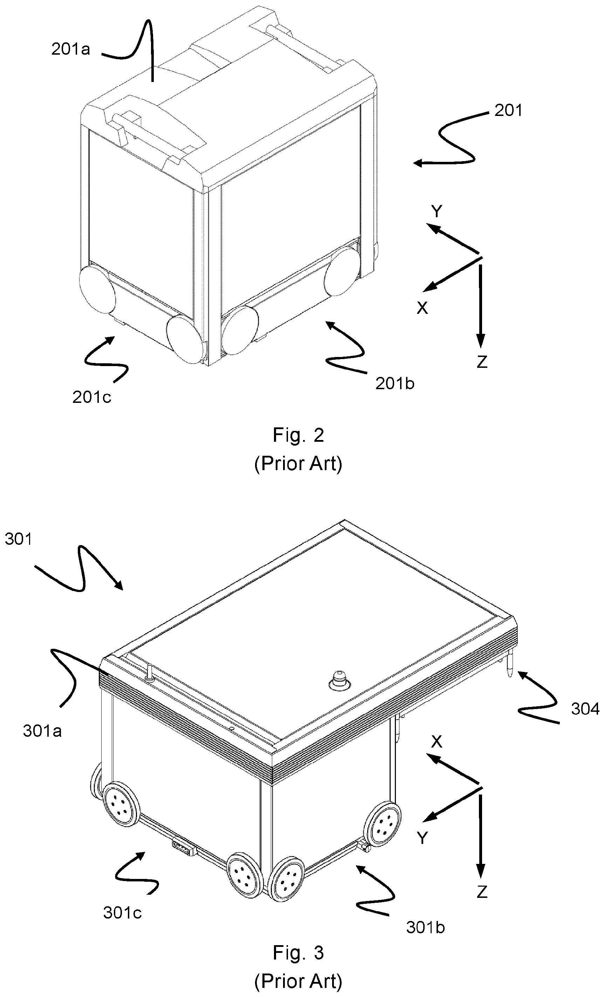

Fig. 1 discloses a typical prior art automated storage and retrieval system 1 with a framework structure 100 and Fig. 2 and 3 disclose two different prior art container handling vehicles 201,301 suitable for operating on such a system 1.

The framework structure 100 comprises upright members 102, horizontal members 103 and a storage volume comprising storage columns 105 arranged in rows between the upright members 102 and the horizontal members 103. In these storage columns 105 storage containers 106, also known as bins, are stacked one on top of one another to form stacks 107. The members 102, 103 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301 are operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301 in a first direction X across the top of the framework structure 100, and a second set of parallel rails 111 arranged perpendicular to the first set of rails 110 to guide movement of the container handling vehicles 201,301 in a second direction Y which is perpendicular to the first direction X. Containers 106 stored in the columns 105 are accessed by the container handling vehicles through access openings 112 in the rail system 108. The container handling vehicles 201,301 can move laterally above the storage columns 105, i.e. in a plane which is parallel to the horizontal X-Y plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201,301 comprises a vehicle body 201a,301a, and first and second sets of wheels 201b,301b,201c,301c which enable the lateral movement of the container handling vehicles 201,301 in the X direction and in the Y direction, respectively. In Fig. 2 and 3 two wheels in each set are fully visible. The first set of wheels 201b,301b is arranged to engage with two adjacent rails of the first set 110 of rails, and the second set of wheels 201c,301c is arranged to engage with two adjacent rails of the second set 111 of rails. At least one of the sets of wheels 201b,301b,201c,301c can be lifted and lowered, so that the first set of wheels 201b,301b and/or the second set of wheels 201c,301c can be engaged with the respective set of rails 110, 111 at any one time.

Each prior art container handling vehicle 201,301 also comprises a lifting device (not shown) for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301 so that the position of the gripping / engaging devices with respect to the vehicle 201,301 can be adjusted in a third direction Z which is orthogonal the first direction X and the second direction Y. Parts of the gripping device of the container handling vehicle 301 are shown in fig. 3 indicated with reference number 304. The gripping device of the container handling device 201 is located within the vehicle body 201a in Fig. 2.

Conventionally, and also for the purpose of this application, Z=1 identifies the uppermost layer of storage containers, i.e. the layer immediately below the rail system 108, Z=2 the second layer below the rail system 108, Z=3 the third layer etc. In the exemplary prior art disclosed in Fig. 1, Z=8 identifies the lowermost, bottom layer of storage containers. Similarly, X=1...n and Y=1...n identifies the position of each storage column 105 in the horizontal plane. Consequently, as an example, and using the Cartesian coordinate system X, Y, Z indicated in Fig. 1, the storage container identified as 106' in Fig. 1 can be said to occupy storage position X=10, Y=2, Z=3. The container handling vehicles 201,301 can be said to travel in layer Z=0, and each storage column 105 can be identified by its X and Y coordinates.

The storage volume of the framework structure 100 has often been referred to as a grid 104, where the possible storage positions within this grid are referred to as storage cells. Each storage column may be identified by a position in an X- and Y-direction, while each storage cell may be identified by a container number in the X-, Y- and Z-direction.

Each prior art container handling vehicle 201,301 comprises a storage compartment or space for receiving and stowing a storage container 106 when transporting the storage container 106 across the rail system 108. The storage space may comprise a cavity arranged centrally within the vehicle body 201a as shown in Fig. 2 and as described in e.g. WO2015/193278A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The central cavity container handling vehicles 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the central cavity container handling vehicles 101 may have a footprint which is larger than the lateral area defined by a storage column 105, e.g. as is disclosed in WO2014/090684A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks.

WO2018/146304, the contents of which are incorporated herein by reference, illustrates a typical configuration of rail system 108 comprising rails and parallel tracks in both X and Y directions.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301 can drop off storage containers 106 to be transported to an access or a transfer station, and the second port column 120 may be a dedicated pick-up port column where the container handling vehicles 201,301 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301 is instructed to retrieve the target storage container 106 from its position and transport it to the drop-off port column 119. This operation involves moving the container handling vehicle 201,301 to a location above the storage column 105 in which the target storage container 106 is positioned, retrieving the storage container 106 from the storage column 105 using the container handling vehicle's 201,301 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106; and the movement of the container handling vehicles 201,301 so that a desired storage container 106 can be delivered to the desired location at the desired time without the container handling vehicles 201,301 colliding with each other, the automated storage and retrieval system 1 comprises a control system 500 which typically is computerized and which typically comprises a database for keeping track of the storage containers 106.

A problem associated with known automated storage and retrieval systems 1 is that the products stored in the storage containers 106 in the system 1 must be removed from the containers 106 before they can be transported to other locations, such as another corresponding automated storage and retrieval system 1. Thus, products must be removed from the storage containers 106 system 1, packed onto a transport vehicle, unpacked when arriving at a new destination and then placed into a storage container 106 again just to be placed into a new automated storage system 1.

In the prior art there have been attempts to avoid the problem of repackaging products by loading and offloading storage containers 106 into trailers, where the trailers themselves comprise a grid structure similar to an automated storage and retrieval system, as shown in WO2016/166294. However, this requires the construction and maintenance of a fully operational warehouse comprising an automated storage and retrieval system 1 in order to distribute the storage containers 106 from a trailer.

Other prior art has suggested storage systems arranged inside shipping containers, see for example WO2020/074242, such that these systems can be deployed and operated in a modular fashion without requiring large investments in construction time and maintenance. Although these systems are easier, quicker and require less investments to deploy than traditional automated storage and retrieval system, they still require a relatively large structure with extensive investment.

It is an objective of the invention to provide a redistribution centre that solves or alleviates the aforementioned problems of the prior art.

### SUMMARY OF THE INVENTION

The present invention is set forth and characterized in the independent claims, while the dependent claims describe other characteristics of the invention.

In one aspect, the invention is related to a distribution dock comprising:
- a dock for handling and providing access to storage containers of a mobile storage system, the dock comprising a framework structure of upright members and a first rail system arranged on the upright members of the framework structure comprising a set of parallel rails arranged to guide movement of a container handling vehicle in a direction across the top of a framework structure,
- at least one container handling vehicle configured to operate on the first rail system,
- at least one interface comprising a set of parallel tracks configured to connect the first rail system of the dock to a second rails system of a mobile storage system such that the container handling vehicle can retrieve storage containers from the mobile storage system.

Thus, the invention according to the first aspect provides a distribution dock which is cheaper and faster to build than a full automated storage and retrieval system, requires less maintenance and enables rapid connection to a mobile storage system. A distribution dock according to this aspect can thus be set up on short notice in remote areas, or in areas with limited available space or limited infrastructure and connect itself to mobile storage systems such that products and storage containers can be redistributed and consolidated in, between and from mobile storage systems.

Typically, the distribution dock is placed in a certain location for an extended period, whilst mobile storage system can be connected to the dock for shorter periods of time - usually no longer than the time it takes to connect the dock and the mobile storage system, redistributing containers and then disconnecting the dock and the mobile storage system. In contrast, the distribution dock is placed in one location on a permanent or semi-permanent basis.

In certain aspects, a mobile storage system may be provided with a container handling vehicle in addition to vehicles provided with the distribution dock, otherwise the mobile storage system may be provided with one or more container handling vehicles if the distribution dock is not provided with a container handling vehicle. This may be the case if container handling vehicles require maintenance or service, they may be transported to a central service location together with the mobile storage system, and new container handling vehicles may be provided from a central service location to a distribution dock in order to replace malfunctioning vehicles.

The at least one interface may comprise an expansion joint or pivoting connection arrangement allowing fast coupling between the first rail system and the second rail system of a mobile storage system. Such connection joints are known from the prior art, such as WO2020/074257, and provide fast and simple coupling between two rail systems.

The interface expansion joint or pivoting connection may either extend from the first rail system to another interface of a second rail system, or vice versa.

The interface of the distribution dock may comprise a protruding male part provided with tracks for the at least one container handling vehicle to move along and configured to connect to an interface or a second rail system comprising a receiving female part comprising a recess.

In other embodiments, the interface of the distribution dock may comprise a receiving female part comprising a recess configured to connect with a protruding male part provided with tracks for the at least one container handling vehicle to move along of a second rail system. Thus, it will be understood that either the distribution dock or a mobile storage system configured for connection to the distribution dock may be arranged with a protruding male part or a receiving female part as described above.

Such interfaces may comprise a male part that is formed as a portion of a rail, or a gang plank (temporary bridge) comprising tracks that are connectable to other rail systems. In certain embodiments, the interface comprises two parallel rails, thereby forming a bridge for a container handling vehicle to cross over between different rail systems. The parallel rails may otherwise be formed in a substantially similar manner as the rails of a known prior art rail system for an automated storage and retrieval system and thus may comprise two tracks to allow two vehicles to simultaneously pass each other by on one rail. The interface may also comprise a truss, gang plank or framework structure in order to strengthen the rails, since they may typically not be supported by upright members in the area where they extend between two rail systems and there may usually be no need for a container handling vehicle to access the area below the interface.

Preferably, the first rail system comprises an interface configured as a pivoting connection arrangement where a portion of rail, or gang plank comprising tracks, can be pivoted from the first rail system on to the second rail system of a mobile storage system, or vice versa. An interface may be arranged on the first rail system of the distribution dock, it may also be arranged on the second rail system of a mobile storage system. A pivoting connection may account for differences in height between rail systems, since it may be inclined between the two rail systems.

A pivot connection arrangement may be able to span a gap between the first and second rail systems. The pivot connection arrangement may allow the protruding male part to be pivoted between a non-connected position where the first and second rail systems are not connected together and a connected position where the first and second rail systems are connected together by the male protruding part.

In certain embodiments the protruding mail part comprises a gang plank hinged to the dock that is provided with tracks for the at least one container handling vehicle to move along. Thus, in such embodiments, the protruding male part is not formed wholly of rails, but a gang plank comprising tracks. The gang plank may comprise a plurality of double tracks, allowing connection with a plurality of parallel rails and thereby ensuring that two or more container handling vehicles can pass over the gang plank simultaneously.

The container handling vehicle may have a cantilever construction, or it may have a cavity arranged within the body of the vehicle. A vehicle with a cantilever construction has the advantage of being able to deposit and retrieve a storage container on a grid cell of the dock, or an area outside the grid of the dock, and subsequently move away. Thus, a cantilever construction may be beneficial in aspects where the first rail system is arranged such that there is no room for storage of storage containers under the first rail system of the distribution dock. Furthermore, the cantilever construction allows for a container handling vehicle to have a shorter height in comparison to other kinds of vehicles, which may be beneficial if there is limited space between a roof and a rail system which may be the case for certain mobile storage systems and distribution docks having roofs of low height. A cantilever construction also allows storage containers to be stored such that they extend beyond the upper limits of the rail system of a mobile storage system also, thereby allowing extra storage containers to be stored in the mobile storage system beyond that which is strictly underneath the rails system.

A container handling vehicle with a cavity construction may have the advantage of taking up a smaller area on the grid, thereby allowing for more routing options and it is capable of picking up storage containers from all storage columns of a mobile storage system, see for example the prior art vehicles known from WO2015/193278. Depending on the construction of a cavity container handling vehicle it may also be arranged to take up less height, such as the vehicle known from WO2014/090684.

The dock may comprise charging stations for one or more container handling vehicles. The charging station may be arranged at an edge of the first rail system, such that a container handling vehicle may connect a charger plug on its body to a socket arranged in a wall or charging module. Charging stations may also be arranged in a grid cell of the first rail system, such that container handling vehicles may connect to a charging plug through a charger plug arranged beneath the vehicle which is vertically displaced to connect to a socket arranged in a grid cell. The charging station may also use inductive charging.

The distribution dock may comprise no more than six container handling vehicles. Preferably, the distribution dock comprises no more than three container handling vehicles.

The distribution dock may comprise a housing covering the first rail system. The housing may also cover the interfaces for connecting the first rail system to the second rail system of the mobile storage system. The housing may also cover interfaces connecting the rail systems of two mobile storage systems. The housing may in aspects only be configured to cover the first rail system and at least part of the interfaces when the mobile storage system itself comprises a housing, such that the container handling vehicle is shielded from the outside environment when it is operating on said mobile storage system. The housing may be configured to interconnect with housing of a mobile storage system in order to ensure quick connection and that the container handling vehicles are fully shielded from the outside environment when operating on the interfaces.

The first rail system may comprise a grid of a first set of parallel rails arranged to guide movement of a container handling vehicle in a first direction across the top of the framework structure, and a second set of parallel rails arranged perpendicular to the first set of rails to guide movement of the container handling vehicle in a second direction which is perpendicular to the first direction, the first and second sets of parallel rails dividing the first rail system into a plurality of grid cells. Advantageously, this arrangement may allow several container handling vehicles to move around on the first rail system at a time and pass each other by. If the first rail system is connected to the second rail system of the mobile storage system through several interfaces, or an interface with multiple tracks, it may also allow container handling vehicles to pass between the distribution dock and a mobile storage system simultaneously thereby increasing the amount of storage containers and products that are redistributed in a given time period.

As defined herein a distribution dock, in contrast to a traditional warehouse or a distribution centre is not usually intended for the storage of products, other than beyond a limited time frame, but rather to act as a loading bay or loading dock that can distribute products from a mobile storage system to another mobile storage system or to and from an access station, or the redistribution of products within one mobile storage system (e.g., provided on a vehicle trailer or the like). The distribution dock may therefore be configured to connect to a mobile storage system that comprises storage containers, but the distribution dock typically does not include storage containers itself. Furthermore, in contrast to the more transient nature of a mobile storage system which is configured to be only temporary located by the distribution dock, the distribution dock is typically arranged to be located in one location on a permanent or semi-permanent basis.

The distribution dock preferably does not comprise storage containers that are stored in the dock on a permanent basis, however, the distribution dock may be adapted to store storage containers for a limited time. In such embodiments, the distribution dock may be arranged to store a maximum of 500 storage containers, preferably less than 250 containers and in certain embodiments no more than 100. In some embodiments storage containers may not be arranged in stacks, such that there is only space for one storage container in each grid cell of the storage system. Thus, there would in such configurations be space for a maximum of 12 storage containers, preferably no more than 6, dependent on the number of grid cells.

In certain embodiments, the distribution dock may be arranged to only store storage containers that are empty, i.e. where no products are located in the storage containers.

The distribution dock may be arranged with systems arranged to alter the atmospheric conditions inside the dock. For example, the distribution dock may be provided with cooling systems thereby enabling grocery products to be handled or temporarily stored without breaking the cooling chain required for such products. The distribution dock may also be provided with ventilation systems arranged to provide a certain level of gases in the dock that may be required of grocery products. In embodiments where the distribution dock is configured for handling groceries, it may comprise insulation and means on the interfaces and the points of connection between the housing of the dock and a housing of a mobile storage system. The distribution dock may also be provided with lighting means in order to facilitate the handling of organisms growing in the storage containers.

The first rail system may be arranged such that storage containers may be temporarily placed on a platform of the distribution dock during redistribution or consolidation of storage containers and products. The first rail system may be arranged at a height above a supporting platform of the dock such that one storage container placed in a grid cell extends above the first rail system. In other embodiments the distribution dock does not comprise any space to store storage containers.

The dock may be an island within the distribution dock comprising a framework structure to define columns configured to receive storage containers from the at least one container handling vehicle. The columns may be available for use as storage columns for stacks of the storage containers. The dock may comprise no more than twelve columns in a direction of the tracks of the interface. Preferably, the dock may comprise no more than six columns in a direction of the tracks of the interface.

The distribution dock may be mobile, allowing it to be placed in locations with limited infrastructure or available space for larger warehouse facilities. For example, the distribution dock may be configured to be placed at a rest-stop for trucks, or at cross-roads for shipping traffic. Typically, such rest-stops may be located on stretches of road that are remote and lacking in infrastructure. The distribution dock may therefore be arranged to easily connect to available infrastructure such as power supply or an internet connection. Alternatively, or additionally, the distribution dock may comprise batteries and solar power generating means and/or wind power generating means such that it can be placed in areas where there is no available or unstable supply of electricity. It may also be arranged with cellular network technology allowing the distribution dock to be connected to the internet.

In order for the distribution dock to be mobile, it may be arranged on a trailer or in a shipping container such that it can be moved between different locations. The distribution dock may also be supported on a pallet structure, thereby allowing it to be moved by a forklift. The distribution dock may be arranged for lifting with a mobile crane, such that it can be transported and lifted to a specific location. In embodiments, the distribution dock itself may be fitted with wheels allowing it to be transported and moved to a specific position. Although the distribution dock may be mobile, it is understood that once placed in a certain location it is intended to stay in that location for an extended period of time, e.g. until it requires service at a service location, is irreparably damaged or is no longer required at that location.

The first rail system may comprise two or more interfaces for connecting the first rail system to two different mobile storage systems. Thus, the redistribution centre may be used to exchange storage containers between two or more mobile storage systems.

The dock may comprise an access station arranged at a level below a level of the first rail system for allowing access to a storage container delivered to the access station by the at least one container handling vehicle. An access station may be defined herein as a workstation where storage containers are presented to a person or a robotic picker such that products may be picked from the storage container. Typically, access stations are arranged in warehouse environments, but the access station of the distribution dock may be arranged such that it facilitates the order and sale of goods from the mobile storage system. Such access stations for the order or delivery of products are known in the art, e.g. from WO2017/211596 disclosing an access station comprising closable compartment or WO2020/094604 disclosing an access station comprising a mechanism for allowing access to only specific parts of a storage container. Thus, the distribution dock may be arranged in a location for the sale or delivery of goods, where the mobile storage system may be replaced with ease thus replenishing stocks that are available through the distribution dock. The access station may comprise a shaft or a column extending from the first rail system down to a conveyor mechanism for transporting a storage container to an area where it presented to a person for picking from the bin.

The distribution dock may comprise a robotic picker that is arranged in connection with the first rail system. Thus, the distribution dock may allow for consolidation of goods into a single storage container or between several storage containers. This may be advantageous in aspects where two or more mobile storage systems are connected to the distribution dock, as the mobile storage systems may be provided with goods from different warehouses and it may be desirable to consolidate these goods into storage containers before these containers are transported to new locations. It may also be desirable to consolidate goods into one storage container in embodiments where the distribution dock comprises an access station, such that a customer may retrieve several goods in one storage container when visiting the distribution dock.

The robotic picker may be arranged to pick from and between storage containers stationed in a grid cell. Alternatively, there may be allocated a location outside of the first rail system on a platform of the dock where storage containers may be placed and where the robot picks from said storage containers. Placing storage containers outside the first rail system may be advantageous as the picking operation can be performed simultaneously without grid cells being blocked on the rail system during the picking operation.

The robotic picker may be arranged on a platform of the dock. Alternatively, a robotic picker may be arranged on a separate platform connectable to the distribution dock thereby providing a modular addition to the dock.

The distribution dock may comprise a local control unit configured to receive and process information regarding the size, layout and placement of storage containers in the at least one mobile storage system such that the at least one container handling vehicle can operate on and redistribute containers on the at least one mobile storage system.

Such operations may entail ordering the container handling vehicles to rearrange storage containers in a mobile storage system, move storage containers between a dock and a mobile storage system, move storage containers between two or more mobile storage systems and between a mobile storage system and an access station. The operations may also entail operating an access station such that storage containers are transported and presented for picking to a person. The local control unit may furthermore be configured to receive orders for products at the access station of the distribution dock, or remotely via e.g. an online ordering system, processing said orders and operating a container handling vehicle and the access station such that a storage container is retrieved from the mobile storage system by a container handling vehicle and presented at the access station.

The local control unit may be configured to receive information regarding a mobile storage system for connection to the distribution dock, including the layout of the mobile storage system. The local control unit may determine an operating area of the container handling vehicle based on the size of the distribution dock, the layout of the first rail system, the number of interfaces, their location and the connection to the mobile storage system and the size and layout of the mobile storage system and the second rail system of a mobile storage system. The local control unit may also be configured to receive information regarding the number of and placement of individual storage containers in the mobile storage system, which may include products located in each storage container.

In embodiments where the distribution dock comprises an access station, a robotic picker or is connected to two or more mobile storage systems the local control unit may be configured to receive and execute orders to move storage containers from a storage system to an access station or a robotic picker for picking, or it may be configured to receive and execute orders to move storage containers from one mobile storage system to another. Thus, distribution and consolidation of products and storage containers in a mobile storage system, between mobile storage systems or between a mobile storage system and a consumer may be achieved.

The local control unit may be configured to be connected to a central control unit, where the central control unit generates instructions for at least partly operating the distribution dock. Thus, the distribution dock may at least partly be operated through a cloud service. In certain embodiments, the central control unit may operate as a warehouse management system, sending orders to the local control unit regarding which storage containers or products in a certain mobile storage system require reallocation. The central control unit may be configured to receive information regarding a mobile storage system's storage containers and the products located in these containers. The central control unit may also be configured to keep an overview over products placed in different mobile storage systems, and whether these need consolidation and redistribution with other mobile storage system or whether there is demand for these products at distribution dock for making the products accessible to consumers. The central control unit may comprise backend software responsible for keeping track of storage containers and where these are required to be redistributed.

The local control unit may be configured as a standard operating system for an automated storage and retrieval system, where the central control unit generates and provides the local control unit with starting parameters such as an operating area, storage container placement and a set of orders for redistribution of storage containers. Thereafter, the local control unit implements the orders and reports back to the local control unit when these have been executed.

In certain embodiments, the central control unit may fully operate the distribution dock, and the local control unit may only be configured to relay instructions from the central control unit.

In a second aspect, the invention concerns a distribution system comprising a distribution dock according to any embodiments of the aforementioned aspect and at least one mobile storage system.

Thus, the invention provides a distribution system where products can be redistributed and consolidated in a quick and simple manner without requiring the construction of large warehouses. A distribution system according to this aspect can thus be set up on short notice in remote areas, or in areas with limited available space or limited infrastructure by connecting at least one mobile storage system to a distribution dock itself such that products and storage containers can be redistributed and consolidated in, between and from mobile storage systems.

The at least one mobile storage system may preferably be a vehicular mobile storage system, optionally a lorry trailer mounted storage system. A vehicular mobile storage system may comprise a commercial transport vehicle with wheels such as a road haulage trailer. The vehicular mobile storage system may also comprise a commercial transport vehicle arranged to carry a shipping container. It may also comprise smaller lorries or trucks for transporting goods.

The mobile storage system may comprise a shipping container. Such containers are also known as intermodal containers and are used worldwide to store and transport goods efficiently and securely around the world.

The mobile storage system preferably comprises a framework structure comprising upright members defining multiple storage columns, in which storage containers can be stored one on top of another in vertical stacks. Thus, a container handling vehicle from the distribution dock may retrieve and place storage containers in the columns. The framework structure may be arranged on a platform of the mobile storage system, which platform preferably also comprises walls surrounding the framework structure.

The mobile storage system may comprise a second rail system supported by the framework structure, wherein the first rail system of the distribution dock and the second rail system of the mobile storage system may be interconnected by interfaces such as by a pivoting connection arrangement.

The framework structure of the mobile storage system may be substantially similar to prior art framework structure, although reinforcements may be provided in order to ensure that the second rail system and the storage columns are not misaligned or deformed during transportation of the mobile storage system. Thus, the framework structure may comprise profiles forming upright members and horizontal members that are shaped to withstand higher stresses and strains than a standard non-mobile storage system. For example, a standard prior art framework structure may typically only be designed to handle vertical loads, whilst a framework structure in a mobile storage system may be provided with additional reinforcement to handle horizontal loads that are imparted on the framework structure during transport, such as loads from centripetal acceleration. The framework structure may furthermore be supported by suspension connections to the surrounding structure of the mobile storage system in order to prevent vibrations and movement in the mobile storage system causing fatigue and excessive loads during transport.

Due to the irregular loads, heights and alignment the framework of the mobile storage system and the distribution dock may be required to endure during transport and during operation, these framework structures and rail system may be configured with reinforcement to make them more robust than prior art systems which are typically more delicate and configured for extreme precision. This reinforcement may entail any of the aforementioned measures above. The external loads on the framework system may also entail that the tracks of the rail systems can become curved, thus, the container handling vehicles configured to operate on the rail systems of the dock and mobile storage systems may also require a more robust construction.

In certain embodiments, the framework structure of the mobile storage system, and thus the second rail system is arranged at a height such that storage containers can be stacked along the entire height of the mobile storage system. This may be advantageous as the full height of the mobile storage system may be employed to store storage containers. The mobile storage system may in such embodiments comprise a removable roof, such as a tarpaulin cover, removable plates or a retractable awning that can be quickly opened thereby giving access to the storage containers below.

The container handling vehicles are usually configured to operate in a sheltered environment, therefore, if the full height of the mobile storage system is employed for the storage columns either the distribution dock should preferably comprise a roof covering the mobile storage system or it may be located underneath a roof that is large enough to cover the mobile storage system. In other embodiments the mobile storage system may comprise a roof that can be elevated such that the container handling vehicles operate beneath it.

In other embodiments, the framework structure and thus the second rail system of the mobile storage system may be arranged at a height below a roof of the mobile storage system such that the container handling vehicles may operate under the roof of the mobile storage system. Although these embodiments allow for less space to be employed for storage in the mobile storage system, since there is no need for provision of a roof at the distribution dock or to elevate the roof of the mobile storage system, it allows for faster and simpler connection between the mobile storage system and the distribution dock.

The mobile storage system may comprise a second rail system comprising a grid of a first set of parallel rails arranged to guide movement of container handling vehicles in a first direction across the top of the framework structure, and a second set of parallel rails arranged perpendicular to the first set of rails to guide movement of the container handling vehicles in a second direction which is perpendicular to the first direction, the first and second sets of parallel rails dividing the rail system into a plurality of grid cells.

The first rail system of the dock and the second rail system of the at least one mobile storage system are of the same gauge and when interconnected by the tracks of the at least one interface may form an operating area, wherein the operating area comprises a mobile storage area and a distribution area, and wherein the distribution area is smaller than the mobile storage area of the least one mobile storage system.

The operating area may be defined as the entire area on which the container handling vehicle can operate once the second rail system of the mobile storage system and the first rail system of the dock have been interconnected. The mobile storage area may be defined as the area formed by the second rail system directly above the storage columns of the mobile storage system. The distribution area may be defined as the area directly beneath the first rail system of the dock and any interfaces connecting the first rail system of the dock to the second rail system of the mobile storage system.

The dock of the distribution dock may comprise fewer storage spaces for storing containers than any one of the at least one mobile storage system. In certain embodiments, the distribution dock does not comprise storage spaces for storing containers.

Thus, by providing a distribution system where the distribution area is smaller than the mobile storage area, a system is provided where smaller distribution centres can service mobile storage systems, thereby allowing cost-effective, fast and simple provision of distribution facilities for storage container between mobile storage systems in a variety of locations.

A face of the dock and a face of the at least one mobile storage system linked by the interface may correspond in width such that the first rail system comprises the same number of rows of rails that are parallel to the tracks of the interface as the number of rows of rails of the second rail system which are parallel to the tracks of the interface.

The distribution dock may comprise at least two separate interfaces configured to connect the first rail system to at least two separate second rail systems of at least two mobile storage systems.

The distribution system may comprise a distribution dock that comprises at least two separate interfaces configured to connect the first rail system to at least two separate second rail systems of at least two mobile storage systems. Thus, storage containers can be distributed between at least two mobile storage systems each connected to a distribution dock.

The distribution system may comprise a mobile storage system comprising an interface configured to connect it's second rail system to the first rail system of a dock and a second mobile storage system comprising an interface configured to connect it's second rail system to the second rail system of the first mobile storage system. Thus, mobile storage systems may be interconnected even if the distribution dock only has interface capacity enough to connect directly to one mobile storage system at a time.

In a third aspect the invention is directed to a method of operating a distribution system according to any of the aforementioned embodiments, comprising the steps of:
- arranging at least one mobile storage system at a predetermined distance to the first rail system of a distribution dock,
- connecting the second rail system of the mobile storage system and the first rail system using the at least one interface such that the at least one container handling vehicle can retrieve storage containers from the mobile storage system.

Thus, the invention provides a method of distributing storage containers and products in a distribution system, between and from mobile storage systems to a distribution dock in a quick and simple manner without requiring the construction of large distribution warehouses. Distribution of products can thus take place in systems set up on short notice in remote areas, or in areas with limited available space or limited infrastructure by connecting at least one mobile storage system to a distribution dock and performing the abovementioned steps.

The method may also comprise the steps of:
- arranging a second mobile storage system at a predetermined distance to the first rail system,
- connecting the second rail system of the second mobile storage system and the first rail system using a second interface such that the at least one container handling vehicle can operate on and between the first rail system and the mobile storage systems,
- transferring storage containers between the at least two mobile storage systems using the at least one container handling vehicle.

The method may also comprise the steps of:
- arranging a second mobile storage system at a predetermined distance to the first rail system,
- connecting the second rail system of the second mobile storage system with the second rail system of the first mobile storage system using an interface arranged on either the first or second mobile storage system such that the at least one container handling vehicle can operate on and between the first rail system of the dock and the second rail systems of the mobile storage systems,
- transferring storage containers between the at least two mobile storage systems using the at least one container handling vehicle.

The method may also comprise the steps of:
- providing information to a local control unit regarding the size, layout and placement of storage containers in the at least one mobile storage system,
- providing information to the local control unit regarding the reallocation of storage containers in the at least one mobile storage system.

The method may also comprise the steps of:
- using the local control unit to process said information and generate orders to the containers handling vehicles to move the storage containers accordingly,
- determining, using the control unit, which storage containers to transfer between the at least two mobile storage systems.

In aspects where the distribution dock comprises robotic picker, the method may comprise the steps of:
- temporarily locating a plurality of storage containers in the vicinity of the robotic picker,
- consolidating products into a storage container by picking products between the plurality of storage containers.

The redistribution centre may comprise an access station, and the method may comprise the step of:
- transferring storage containers from the at least one mobile storage system to the access station.

The redistribution centre may comprise a robotic picker and the method may comprise the steps of:
- temporarily locating a plurality of storage containers in the vicinity of the robotic picker,
- consolidating products into a storage container by picking products between the plurality of storage containers.

In the following description, numerous specific details are introduced by way of example only to provide a thorough understanding of embodiments of the claimed distribution dock, system and method. One skilled in the relevant art, however, will recognize that these embodiments can be practiced without one or more of the specific details, or with other components, systems, etc. **In** other instances, well-known structures or operations are not shown, or are not described in detail, to avoid obscuring aspects of the disclosed embodiments.

### BRIEF DESCRIPTION OF THE DRAWINGS

The following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3 is a perspective view of a prior art container handling vehicle having a cantilever for carrying storage containers underneath.
Fig. 4 is a schematic cross-section view of an embodiment of the inventive distribution dock situated beneath a roof and connected to a mobile storage system in the form of trailer, thereby forming a distribution system.
Fig. 5A is schematic birds-eye view of an embodiment of the inventive distribution dock comprising an access station and connected to a mobile storage system in the form of trailer, thereby forming a distribution system.
Fig. 5B is a schematic perspective view of the inside of a distribution dock and mobile storage system having a similar layout to that of the embodiment shown in Fig. 5A.
Fig. 6 is a schematic birds-eye view of an embodiment of the inventive distribution dock comprising two robotic pickers and two separate interfaces each connected to a mobile storage system thus forming a distribution system.
Fig. 7 is a schematic birds-eye view of an embodiment of the inventive distribution dock connected via an interface to a first mobile storage system, and wherein the first mobile storage system is connected via an interface to a second mobile storage system, wherein the second mobile storage system is connected via an interface to a third mobile storage system.
Fig. 8A is a schematic birds-eye view of the inventive distribution dock connected via two separate interfaces to mobile storage systems on opposite sides of the dock thus forming a distribution system, and wherein the dock only comprises space for storing one container handling vehicle.
Fig. 8B is a cross-section view of the inventive distribution dock and system as shown in Fig. 8A where a roof and shelter for the container handling vehicle is visible.
Fig 9. is a schematic flow diagram illustrating steps of the inventive method.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

The framework structure 403 of the dock 400 may be constructed in accordance with the prior art framework structure 100 described above in connection with Figs. 1-3, albeit comprising much fewer columns than the illustrated framework structure 100, i.e. comprising a set of upright members 404 and a set of horizontal members 406, which are supported by the upright members 404, and further that the framework structure 403 comprises an upper rail system 608 in the X direction and Y direction.

The framework structure 403 may further comprises storage compartments in the form of storage columns 405 provided between the members 404, 406, where storage containers 106 are stackable in stacks 407 within the storage columns 405.

The framework structure 700 of a mobile storage system 701,702,703 may also be may be constructed in accordance with the prior art framework structure 100 described above in connection with Figs. 1-3, albeit comprising fewer columns than the illustrated framework structure 100. Furthermore, the framework structure 700 may comprise additional reinforcement means and suspension in order to protect the structure 700 from loads and vibrations imparted during transport.

In addition to a limited number of upright members, e.g., less than 500, preferably less than 250 and may be less than 100, the framework structure 403 in a dock 400 may be adapted such that it does not allow for the storage of storage containers 106 or only a very limited number of storage containers 106. Similarly, the framework structure 700 in a mobile storage system 701,702,703 may be adapted to fit inside a standardized road haulage trailer or shipping container and thus only store as many storage containers as the volume of such a mobile storage system allows for.

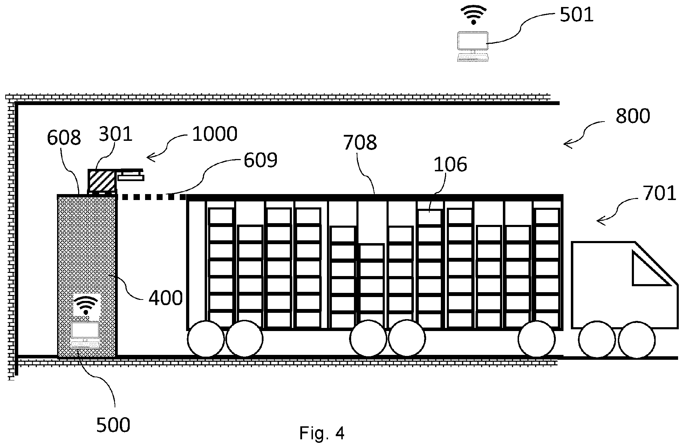

One embodiment of the distribution dock 1000 and distribution system 800 according to the invention will now be discussed in more detail with reference to Fig. 4. This Figure illustrates a container handling device 301 operating on the first rail system 608 of a dock 400. The distribution dock 1000 in this embodiment is formed as a tower providing a platform within the distribution system 800 with the first rail system 608 arranged on the top of the platform structure, such that it will be of level height with the second rail system 708 of a mobile storage system 701 that it is arranged to connect to. In the embodiment illustrated in Fig. 4, the dock 400 does not comprise space beneath the first rail system 608 for storing storage containers 106. However, storage containers 106 could still be temporarily placed on the top of the platform by the container handling vehicle 301 since it has a cantilever construction. In this embodiment, the storage containers 106 may be arranged in the grid cells 622 of the first rail system 608, but only to such a degree that the cantilever container handling vehicle 301 is able to pass around the storage containers 106, i.e. preferably no more than two storage containers 106 are arranged on the dock 400.

Although Fig. 4 is a cross-section view of the dock 400, it will be understood that the first rail system 608 may comprise a grid of rails upon which container handling vehicles 201,301 may pass each other. Also not illustrated in Fig. 4 is a wall or fence that may be arranged around the first rail system 608 of the dock 400, the interface 609 and the second rail system 708 of the mobile storage system 701,702,703 in order to prevent container handling vehicles 201,301 falling of any parts of the combined rail system. The wall or fence may either be a structure which forms part of the walls of the dock 400 and the mobile storage system 701,702,703 which extend to a level above the rail systems 608,708, or it may be a structure which is mounted during connection of the dock 400 to a mobile storage system 701,702,703.

The mobile storage system 701 in Fig. 4 is illustrated as comprising storage columns 105 that reach to the uppermost extent of the mobile storage system 701. Thus, the storage capacity of the mobile storage system 701 may be fully exploited. The distribution system 800 may comprise a canopy covering a working or substantial part of the area. For example, a removable roof, not illustrated herein, may be arranged above the second rail system 708, and the roof can be removed once the mobile storage system 701 has been arranged next to the dock 400. Such a roof could be made of tarpaulin, fixed plates or by other retractable means allowing quick removal of the roof. In other embodiments, the roof could be made from more permanent materials like tiles and shingles fitted to a support structure.

Since the embodiment in Fig. 4 comprises a mobile storage system 701 and dock 400 without housing arranged above the rails system 608 allowing space for the container handling vehicles 201,301 to operate beneath it is advantageous to locate them in a roofed environment as schematically illustrated in the Figure. This could for example be a warehouse or a loading bay area of a warehouse, such that the entire rail system of the mobile storage system 701,702,703 upon which the container handling vehicles 201,301 operates is sheltered from the environment.

Once a mobile storage system 701,702,703 has been arranged next to the dock 400 at a predetermined distance, the at least one interface 609 on the first rail system 608 of the dock 400 is connected to an interface 609 on the second rail system 708 of the mobile storage system 701,702,703 thereby allowing the container handling devices 201,301 to move from the dock 400 to the mobile storage system 701,702,703 and start operation thereupon. Interfaces 609 that allow quick connection between two rails systems 608,708 are known from inter alia WO2020/074257. The predetermined distance may be determined by the length and configuration of the at least one interface 609.

The at least one interface 609 may comprise an expansion joint or pivoting connection arrangement allowing fast coupling between the first rail system 608 of the dock 400 and the second rail system 708 of a mobile storage system 701,702,703. The interface expansion joint or pivoting connection may either extend from the first rail system 608 of the dock 400 to another interface 609 of a second rail system 708 of a mobile storage system 701,702,703, or vice versa. A pivoting connection arrangement may be preferable as it allows a fast and reliable connection between two rails systems 608,708 whilst accounting for potential differences in height between the rail systems 608,708 of the dock 400 and a mobile storage system 701,702,703.

Fig. 4 schematically illustrates a local control unit 500 in connection with the distribution dock 1000. The local control unit 500 may be integrated into the dock 400 such that it is configured to send and receive signals to the container handling vehicles 201,301 operating on the rail systems 608,708, e.g. with antennas arranged at suitable places above the first rail system 608 thereby ensuring a wireless connection to the vehicles 201,301 during their operation. The local control unit 500 may also have a screen or similar human interface arranged at an accessible ground floor level, allowing a human operator to interact with the local control unit 500. This could be a customer collecting an order or package for example. The interface may also be arranged on the mobile storage system 701,702,703.

Information regarding the regarding the size, layout and placement of storage containers 106 in the mobile storage systems 701,702,703 that are to be connected to the distribution dock 1000 may be provided to the local control unit 500 in various different manners. It may be provided through an internet link from a central control unit 501, or the information may be uploaded at the distribution dock's 1000 local control unit 500 using a memory storage unit. Once the local control unit 500 has received the information and the rail systems 608,708 of the dock 400 and the mobile storage systems 701,702,703 are connected, the container handling vehicles 201,301 will be able to start operating on the basis of commands from the local control unit 500.

The information provided to the local control unit 500 may comprise instructions regarding the redistribution of storage containers 106 within a mobile storage system 701,702,703, or between two mobile storage systems 701,702,703 connected to a dock 400. For example, a central control unit 500 may instruct that a certain number of containers 106 from a first mobile storage system 701,702,703 be transferred to a second mobile storage system 701,702,703. In embodiments where the distribution dock 1000 comprises an access station 401 or a robotic picker 402, the instructions may require products to be consolidated in storage containers 106 by a robotic picker 402 or a person at the access station 401. The local control unit 500 will in such embodiments also be configured to provide instructions to the robotic picker 402 or person at the access station 401 regarding which products are to be picked between storage containers 106.

The central control unit 501, schematically illustrated in Fig. 4 as being located at another location physically distant to the distribution dock 1000, is typically connected to the local control unit 500 via an internet connection. In areas with a reliable internet connection, it may be preferable that the central control unit 501 receives and processes information regarding both the distribution dock 1000, such as layout, number of container handling vehicles 201,301 and number of interfaces 609, and information regarding the mobile storage system 701,702,703, such as size, layout and placement of storage containers 106. The central control unit 501 may thus be configured to provide the local control unit 500 with commands regarding operation of the distribution system 800, such that the local control unit 500 merely relays signals from the central control unit 501, in effect operating the distribution system 800 via a cloud service. In areas where reliable internet connection cannot be guaranteed, it may be preferable that the local control unit 500 processes the aforementioned information, operates the distribution system 800 independently.

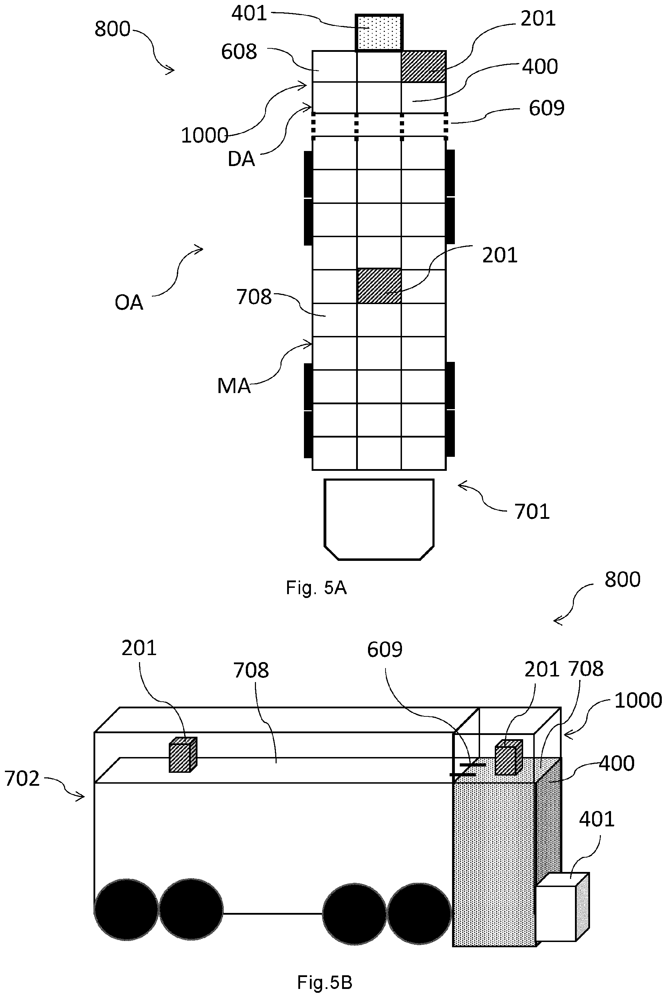

It will be understood that the various arrangements of a local control unit 500 and a central control unit 501 as explained with reference to Fig. 4 are equally applicable for all embodiments of the invention including those exemplified in Figs. 5-8.

Fig. 5A illustrates in a bird's eye perspective the connection of a distribution dock 1000 and a mobile storage system 701,702,703 via three interfaces 609. Each interface 609 comprises a connection between at least two parallel rails of each rail system 608,708, thereby allowing a container handling vehicle 201,301 to cross between the rail systems 608,708 of the dock 400 and a mobile storage system 701,702,703. Since the rails may be formed with two pairs of tracks, it may only be necessary with four rails in order to form three interfaces 609 as schematically illustrated in Fig. 5A. In other embodiments of the invention, instead of three interfaces 609 made up of four rails, one interface 609 comprising one gang plank structure with tracks may be arranged in order to provide three routes for container handling vehicles 201,301 to travel along.

Fig. 5A illustrates the surface area of the dock 400, referred to as the distribution area DA herein, being smaller than the surface area of the mobile storage system 702, referred to as the mobile storage area MA herein. The combined distribution area DA and the mobile storage area MA together with the surface area of the interfaces form the operating area OA, i.e. the entire area of combined rail systems 608,708 where the container handling vehicles 201,301 can operate. The distribution area DA may be up to at least half the size of a mobile storage area MA. The size of a mobile storage area MA may vary, but it is typically limited to the size constraints for a standard road haulage trailer or a standard shipping container. Preferably, the distribution area DA may be at most a third of the size of a mobile storage area MA. Even more preferably, the distribution area DA may be at most a fourth of the size of a mobile storage area MA.

In embodiments where the dock 400 comprises storage space for storage containers 106, it may typically be limited to less than the number of storage spaces in any mobile storage system 701,702,703 it is configured to be connected to. Thus, a distribution dock 1000 may serve as a pickup or delivery point for goods, which are temporarily stored therein, after or before being transferred from or to a mobile storage system 701,702,703 and transported to or away from the dock 400. Typically, a dock 400 will have less than half the number of available storage spaces for storage containers 106 than a mobile storage system 701,702,703. The number of spaces for storage containers 106 in a mobile storage system 701,702,703 may vary, but it is typically limited to the volume constraints for a standard road haulage trailer or a standard shipping trailer. Preferably, the dock 400 may comprise at least space for a third of the number of storage containers 106 as a mobile storage system 701,702,703. Even more preferably, the dock 400 may comprise at least space for a fourth of the number of storage containers 106 as a mobile storage system 701,702,703.

Fig. 5A and 5B schematically illustrate another embodiment of the invention where a distribution dock 1000 is provided with a roof covering its second rail system 708 arranged at a level above the rail system 708 that allows container handling vehicles 201,301 to operate in a sheltered environment. Fig. 5B schematically illustrates in a perspective view that connected to the dock 400 is a mobile storage system 702 in the form of a road haulage trailer, also having a roof arranged at a level above its second rail system 708 that allows the container handling vehicles 201,301 to operate in a sheltered environment. Although the arrangement shown in Fig. 5B may leave less storage space available for storage in the columns of the mobile storage system 702 since part of the height of the storage system 70 is taken up by the space required for a container handling vehicle 201,301 to move around, this arrangement facilitates connection to a dock 400 in areas where infrastructure such as a roof covering the entire mobile storage system 702 is not available.

It is also conceivable that the roof and upper walls of the mobile storage system 702 may be extendable, such that upon arrival at a dock 400 the roof may be extended upwards to provide space for container handling vehicles 201,301 to operate on the grid in a sheltered environment. The roof and walls of the dock 400 and the roof of the mobile storage system 702 may advantageously be arranged to be connected physically in order to form one sheltered environment for the container handling vehicles 201,301 when operating on the combined rail system 608,708. The wall of the dock 400 which faces the connecting side towards the mobile storage system 702 may comprise a door in order to form an opening where a container handling vehicle 201,301 may pass through to a mobile storage system 701,702,703.

The distribution dock 1000 in Fig. 5A and 5B also comprises an access station 401 which is configured to allow storage containers 106 to be presented for picking of products. A storage container 106 may be lowered through a port column in the first rail system 608 adjacent the access station 401 and conveyed to the access station 401 as is known. Thus, a person may pick goods into or out of the storage container 106 presented at the access station 401 of the distribution dock 1000. The distribution dock 1000 may thus serve as a pickup point for parcels or other goods stored in the mobile storage system 702. A distribution dock 1000 can be arranged at a fixed location, where it can be connected to a mobile storage system 701,702,703 that is transported to the dock 400. Consumers may thus collect or deliver products at the access station 401 of the distribution dock 1000. In order to replenish the stock of products accessible to consumers via the pickup point, the mobile storage system 701,702,703 may simply be replaced. In other aspects, where the dock 400 itself is configured to store storage containers 106, it may be replenished by connection for a short period of time to a mobile storage system 701,702,703. An access station 401 may also be configured as modular unit that can be connected to a distribution dock 1000.

It will be understood that configuring the distribution dock 1000 with an access station 401 and roof as illustrated in Fig. 5B is applicable for all the other embodiments of the distribution dock 1000, including those exemplified in Figs. 4, 5A and 6-8.

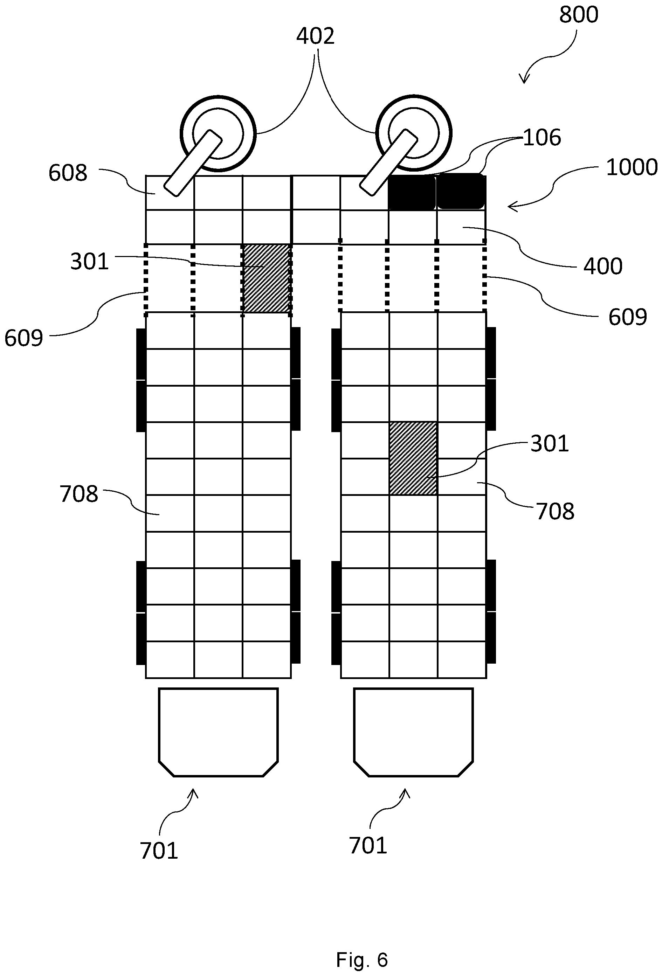

Fig. 6 is a bird's eye illustration of two mobile storage systems 701 connected to one distribution dock 1000. Two cantilever container handling vehicles 301 are shown operating on the combined rail system 608,708 of the distribution system 800. The two mobile storage systems 701 are illustrated as road haulage trailers with their back end facing the dock 400 and connected through three interfaces 609 each to the rail system 608 of the dock 400. This configuration therefore allows storage containers 106 to be moved between the two mobile storage systems 701.

Additionally, the distribution dock 1000 in Fig. 6 is illustrated as comprising two robotic pickers 402 configured to pick products between storage containers 106 arranged at the rail system 608 level of the dock 400. The two black squares on the first rail system 608 represent two storage containers 106 that one of the robotic pickers 402 is picking between. Although the distribution dock 1000 is illustrated as having two robotic pickers 402, it may in many cases only require one. It is also conceivable that the robotic picker 403 does not pick between storage containers 106 that are arranged inside the rail system 608, but it could be placed at one or more access stations 401 of the distribution dock 1000. For distribution docks 1000 that comprise cantilever robots 301, as illustrated in Fig. 6, the storage containers 106 intended for picking may also be placed outside of the rail system 608 on a platform of the dock 400 or in grid cells 622 of the dock 400.

In embodiments where the robotic picker 402 picks between storage containers 106 located in the rail system 608, or storage containers 106 placed on the outside of the rail system 608, the robotic picker 402 is preferably arranged on a platform structure at a same height as the first rail system 608 of the dock 400. The robotic picker 402 may thus also be covered by a roof of the distribution dock 1000.

It will be understood that the aspects of a distribution dock 1000 having one or more robotic pickers 402 as explained with reference to Fig. 6, equally applies for all embodiments of the invention including those illustrated in Figs. 4, 5, 7 and 8.

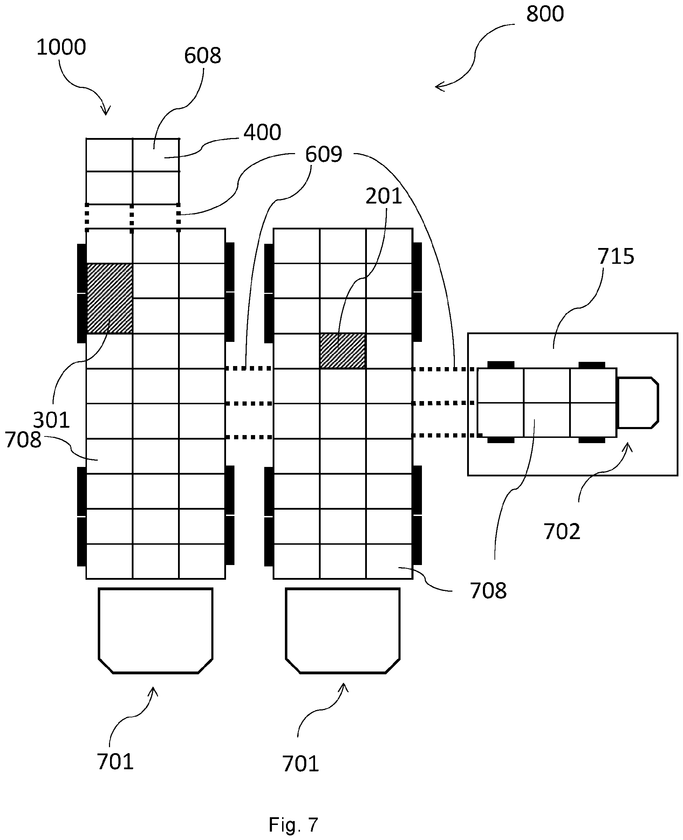

Fig. 7 is another bird's eye illustration showing a distribution dock 1000 connected through two interfaces 609 to a first mobile storage system 701, exemplified as a road haulage trailer. In this embodiment, one cantilever container handling vehicle 301 and one cavity container handling vehicle 201 are shown cooperatively operating on the combined rail system 608,708 of the distribution system 800. A second mobile storage system 701, exemplified as another road haulage trailer, is shown connected through two interfaces 609 to the first mobile storage system 701. The second mobile storage system 701 has interfaces 609 arranged at longitudinal sides, instead of at the longitudinal ends of the system as previously shown. Having interfaces 609 at the side of a mobile storage system 701,702,703 may be beneficial, especially for vehicle mounted systems, since maneuvering the vehicle into position alongside another interface 609 may be easier than backing up to an interface 609. Furthermore, there is more room for interfaces 609 alongside of a mobile storage system 701,702,703, particularly those of longitudinal form such as a shipping container or trailer vehicle, thereby potentially allowing more routing options for container handling vehicles 201,301 between.

A third mobile storage system 703, exemplified as a delivery truck, is shown connected to the second interface 609 of the second mobile storage system 701. A delivery truck 703, or smaller vehicle may typically be of a height that is lower than a trailer, and thus the distribution system 800 may comprise an elevating platform 715 or other height adjustment means in order to raise the truck such that the height of its rail system 708 is aligned with the rail system 708 of another mobile storage system 701,702, or a 400. Such height adjustment means 715 may also be arranged for other mobile storage systems 701,702,703, such as road haulage trailers, in order for them to be aligned at a height of the dock 400. In other variants, a dock 400 may comprise height adjustment means in order for it to be aligned with the height of a mobile storage system 701,702,703. A mobile storage system 701,702,703 may itself also comprise height adjustment means, and stabilization means in order for its rail system 708 to be arranged at a requisite height, with the requisite inclination and the requisite stability in order for the container handling vehicles 201,301 to be able to operate efficiently and at maximum capacity.

The dock 400 itself may also be arranged with height adjustment means such as telescopic upright members, or a platform supporting the first rail system 608 may be elevatable in relation to the underlying part of the dock 400. Thus, the dock 400 and the first rail system 608 may be adjusted in a horizontal direction in order to align with the second rail system 708 of a mobile storage system 701,702,703.

In certain embodiments, horizontal adjustment means may also be provided in order to adjust the first rail system 608 of the dock 400 in X and/or Y directions in order to fine tune alignment of the first rail system 608 with a second rail system 708 of a mobile storage system 701,702,703. Such horizontal adjustment means may comprise the platform on which the first rail system 608 is arranged being movable relative to the dock 400 by use of rack and pinion systems or other suitable adjustment means.

The interfaces 609 arranged for connection between two mobile storage systems 701,702,703 may be substantially similar as those arranged for connection between the rail systems 608,708 of a dock 400 and a mobile storage system 701,702,703. An advantage of providing a distribution system 800 where a first and second mobile storage system 701,702,703 are able to connect via interfaces 609 independently of the dock 400 is that the size of the distribution dock 1000 may be kept to a minimum. As exemplified in Fig. 7, the dock 400 is just big enough to accommodate the cantilever vehicle 301 and the cavity vehicle 201 that are sent out to be operated on the distribution system 800. Alternatively, the distribution dock 1000 in Fig. 7 could comprise two cantilever vehicles 301, each facing different directions, thereby allowing all storage containers 106 on the mobile storage systems 701,702,703 to be accessed.

As in the previous embodiments, any of the mobile storage systems 701,702,703 may comprise a roof and wall configured to be extendable to cover the portion of the system formed by the interfaces 609 between either the distribution dock 1000 or any of the other mobile storage systems 701,702,703.

It will be understood that the arrangement of the interfaces 609 on the mobile storage systems 701,702,703 illustrated in Fig. 7 and the use of height adjusting means for the mobile storage systems 701,702,703 and/or dock 400 as described with reference to Fig. 7 are equally applicable for all embodiments of the invention including those exemplified in Figs. 4, 5, 6 and 8.

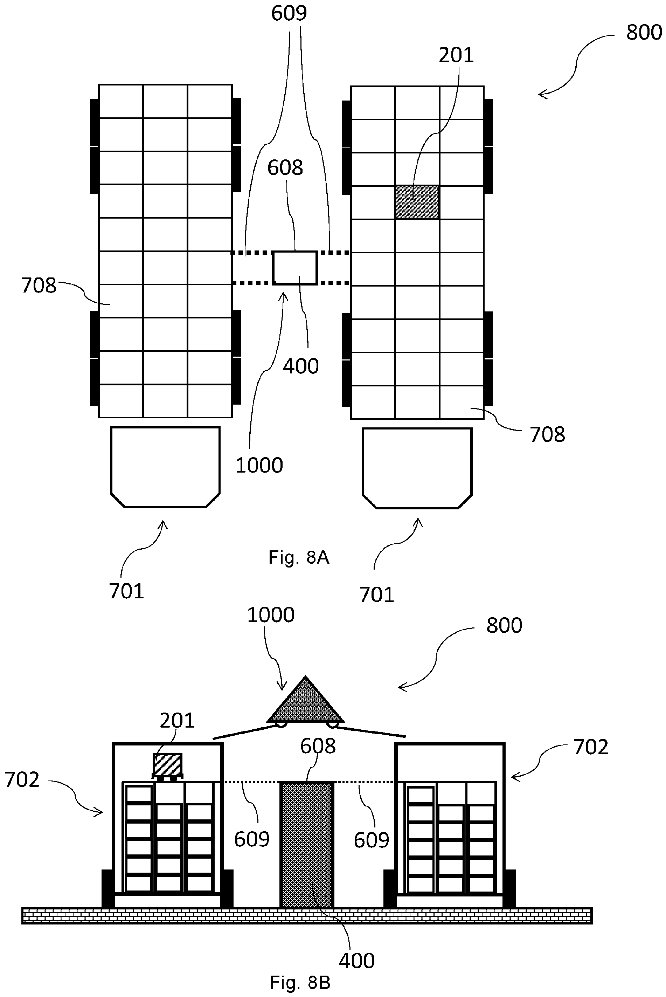

Figs. 8A and 8B illustrate another embodiment of a distribution dock 1000 and two mobile storage systems 701 having interfaces 609 arranged along their longitudinal sides, respectively in a bird's eye view and in a cross-sectional view. The dock 400 in these Fig. 8 embodiments is reduced to a minimal size; only comprising space for one container handling vehicle 201 and without comprising space for the storage of storage containers 106. Thus, this embodiment presents a distribution dock 1000 that has low investment costs and may even be deployable to areas where it is expedient to have distribution system 800 for redistributing storage containers 106 between mobile storage systems 701,702,703.

The cross-sectional view of the distribution dock 1000 in Fig. 8B further illustrates schematically how the dock 400 may comprise hinged plates that function as walls when the dock 400 is not connected to a mobile storage system 701,702,703 and which can be raised, thereby functioning as a roof over the interface 609 portion of the rail system 608,708 when the dock 400 is connected to a mobile storage system 701,702,703. Walls may also be provided to shield the portion of the system formed by the interfaces 609 in the form of tarpaulin covers or plates that are retractable from the hinged roofing plate.

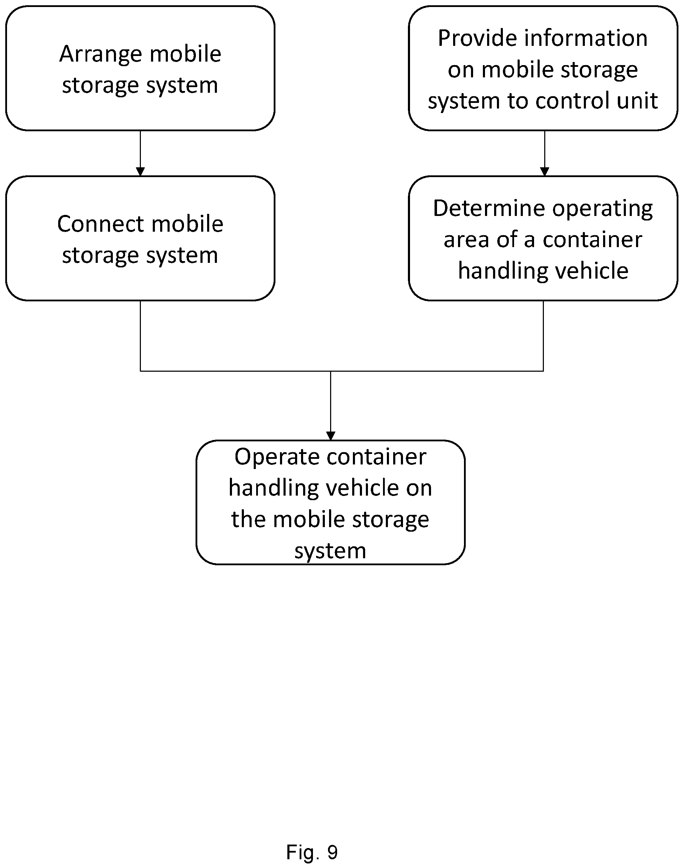

Fig. 9 is a flow diagram exemplifying steps in the operation of a distribution system 800, comprising:
- Arranging a mobile storage system 701,702,703 at a predetermined distance to the first rail system 608. This operation may be performed manually, e.g. by a person driving a road haulage trailer with a mobile storage system 701,702,703, or it may be preferable that the mobile storage system 701,702,703 has an autonomous driving system configured to move the mobile storage system 701,702,703 into a desired distance such that the interfaces 609 of the first rail system 608 can be connected with the mobile storage system 701,702,703. It may also entail maneuvering in a vertical direction or adjusting inclination of any parts of the distribution system 800, such as adjusting the mobile storage system 701,702,703 or dock 400 to a desired height using height adjustment means.
- Connecting the second rail system 708 of the mobile storage system 701,702,703 and the first rail system 608 of the dock 400 using the at least one interface 609 such that the at least one container handling vehicle 201,301 can retrieve storage containers 106 from the mobile storage system 701,702,703.
- The step of providing information regarding the mobile storage system 701,702,703 to the local control unit 500 may be performed before, simultaneously or after the mobile storage system 701,702,703 and the dock 400 have been connected in any of the variants previously described in relation to Fig. 4. Once the information has been processed by either a local control unit 500 or a central control unit 501, an operating area OA has been determined and rail systems 608,708 are connected, the container handling vehicle 201,301 can move from the dock 400 over the interfaces 609 and commence operation on the mobile storage system 701,702,703.
- The operation of the container handling vehicle 201,301 on the mobile storage system 701,702,703 may in its simplest form comprise rearrangement of the storage containers 106 in said mobile storage system 701,702,703. In other variants, the operation may entail retrieving storage containers 106 from either the distribution dock 1000 or a mobile storage system 701,702,703 to:
   ∘ be presented at an access station 401, which could entail picking of products from the storage container 106
   ∘ to be temporarily stored at the dock 400,
   ∘ to be picked by a robotic picker 402 at the dock 400, or
   ∘ to be transferred between multiple mobile storage systems 701,702,703.
- As previously described the commands that the relate to any of the abovementioned operations will typically be provided either by a central control unit 501, which keeps an oversight of the storage containers 106 in the distribution system 800 and/or it will be provided manually to the local control unit 500, e.g. by the use of a memory unit provided with the mobile storage system 701,702,703.

In the preceding description, various aspects of the distribution dock 1000, distribution system 800 and method according to the invention have been described with reference to the illustrative embodiments. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention.

**LIST OF REFERENCE NUMBERS**

| | |
|---|---|
| 1 | Prior art automated storage and retrieval system |
| 100 | Framework structure |
| 102 | Upright members of framework structure |
| 103 | Horizontal members of framework structure |
| 104 | Storage grid |
| 105 | Storage column |
| 106 | Storage container |
| 106' | Particular position of storage container |
| 107 | Stack |
| 108 | Rail system |
| 110 | Parallel rails in first direction (X) |
| 110a | First rail in first direction (X) |
| 110b | Second rail in first direction (X) |
| 111 | Parallel rail in second direction (Y) |
| 111a | First rail of second direction (Y) |
| 111b | Second rail of second direction (Y) |
| 112 | Access opening |
| 119 | First port column |
| 120 | Second port column |
| 122 | Grid cell |
| 201 | Prior art storage container vehicle |
| 201a | Vehicle body of the storage container vehicle 201 |
| 201b | Drive means / wheel arrangement, first direction (*X*) |
| 201c | Drive means / wheel arrangement, second direction (*Y*) |
| 301 | Prior art cantilever storage container vehicle |
| 301a | Vehicle body of the storage container vehicle 301 |
| 301b | Drive means in first direction (*X*) |
| 301c | Drive means in second direction (*Y*) |
| 304 | Gripping device |
| 400 | Dock |
| 401 | Access station |
| 402 | Robotic picker |
| 403 | Dock framework structure |
| 404 | Upright members of dock framework structure |
| 405 | Dock storage columns |
| 410 | Parallel dock rails in first direction (*X*) |
| 411 | Parallel dock rails in second direction (*Y*) |
| 422 | Dock grid cells |
| 500 | Local control unit |
| 501 | Central control unit |
| 600 | Supporting platform |
| 608 | Permanent rail system |
| 609a | Grid connector interface |
| 700 | Mobile storage system framework structure |
| 701 | Mobile storage system - trailer with rail system at full height |
| 702 | Mobile storage system - trailer with rail system at height leaving space for container handling device |
| 703 | Mobile storage system - truck with rails system |
| 704 | Mobile storage system upright members |
| 705 | Mobile storage system storage columns |
| 707 | Mobile storage system vertical stacks |
| 708 | Mobile storage rail system |
| 710 | Mobile storage systems parallel rails in first direction (X) |
| 711 | Mobile storage systems parallel rails in second direction (Y) |
| 715 | Elevating platform |
| 722 | Mobile storage system grid cells |
| 800 | Distribution system |
| 1000 | Distribution dock |
| *X* | First direction |
| *Y* | Second direction |
| *Z* | Third direction |

The application further discloses the subject-matter of the following clauses which may form the basis of one or more claims:
Clause 1. A distribution dock (1000) comprising:
   - a dock (400) for handling and providing access to storage containers (106) of a mobile storage system (701,702,703), the dock (400) comprising a framework structure (403) of upright members (404) and a first rail system (608) arranged on the upright members (404) of the framework structure (403) comprising a set of parallel rails (410,411) arranged to guide movement of a container handling vehicle (201,301) in a direction (X,Y) across the top of the framework structure (403),
   - at least one container handling vehicle (201,301) configured to operate on the first rail system (608),
   - at least one interface (609) comprising a set of parallel tracks configured to connect the first rail system (608) of the dock (400) to a second rail system (708) of a mobile storage system (701,702,703) such that the container handling vehicle (201,301) can retrieve storage containers (106) from the mobile storage system (701,702,703).
Clause 2. The distribution dock (1000) according to clause 1, wherein the first rail system (608) comprises a grid of a first set of parallel rails (410) arranged to guide movement of a container handling vehicle (201,301) in a first direction (X) across the top of the framework structure(404), and a second set of parallel rails (411) arranged perpendicular to the first set of rails (110) to guide movement of the container handling vehicle (201,301) in a second direction (Y) which is perpendicular to the first direction (X), the first and second sets of parallel rails (410,411) dividing the first rail system (608) into a plurality of grid cells (422).
Clause 3. The distribution dock (1000) according to any preceding clause, where the first rail system (608) comprises two interfaces (609) for connecting the first rail system (608) to two different mobile storage systems (701,702,703).
Cluse 4. The distribution dock (1000) according to any of the preceding clauses, wherein the distribution dock (1000) comprises a local control unit (500) configured to receive and process information regarding the size, layout and placement of storage containers (106) in the at least one mobile storage system (701,702,703) such that the at least one container handling vehicle (201,301) can operate on a second rail system (708) of the at least one mobile storage system (701,702,703).
Clause 5. The distribution dock (1000) according to clause 4, wherein the local control unit (500) is configured to be connected to a central control unit (501), where the central control unit (501) generates instructions for at least partly operating the distribution dock (1000).
Clause 6. The distribution dock (1000) according to any of the preceding clauses, wherein the dock (400) is an island within the distribution dock (1000) comprising the framework structure (404) to define columns (405) configured to receive storage containers (106) from the at least one container handling vehicle (201,301).
Clause 7. The distribution dock (1000) according to clause 6, wherein at least some of the columns (405) are available for use as storage columns (405) for stacks of the storage containers (106).
Clause 8. The distribution dock (1000) according to any of clause 6 or 7, wherein the dock (400) comprises no more than twelve columns (405) in a direction of the tracks of the interface (609).
Clause 9. The distribution dock (1000) according to any of the preceding clauses, wherein the dock (400) comprises an access station (401) arranged at a level below a level of the first rail system (608) for allowing access to a storage container (106) delivered to the access station (401) by the at least one container handling vehicle (201,301).
Clause 10. The distribution dock (1000) according to any of the preceding clauses, wherein the interface (609) comprises a protruding male part provided with tracks for the at least one container handling vehicle (201,301) to move along and configured to connect to a second rail system (708) comprising a receiving female part comprising a recess.
Clause 11. The distribution dock (1000) according to clause 10, wherein the protruding male part comprises a gang plank hinged to the dock (400) that is provided with tracks for the at least one container handling vehicle (201,301) to move along.
Clause 12. The distribution dock (1000) according to any of clauses 1-9, wherein the interface (609) comprises a receiving female part comprising a recess configured to connect with a protruding male part provided with tracks for the at least one container handling vehicle (201,301) of a second rail system (708).
Clause 13. A distribution system (800) comprising a distribution dock (1000) according to any of the preceding clauses and at least one mobile storage system (701,702,703).
Clause 14. The distribution system (800) according to clause 13, wherein the at least one mobile storage system (701,702,703) is a vehicular mobile storage system (701,702,703), optionally a lorry trailer mounted storage system.
Clause 15. The distribution system (800) according to clause 13 or 14, wherein the at least one mobile storage system (701,702,703) comprises a framework structure (700) comprising upright members (704) defining multiple storage columns (705), in which storage containers (106) can be stored one on top of another in vertical stacks (707) and the second rail system (708) comprising a grid of a first set of parallel rails (710) arranged to guide movement of container handling vehicles (201,301) in a first direction (X) across the top of the framework structure (700), and a second set of parallel rails (711) arranged perpendicular to the first set of rails (710) to guide movement of the at least one container handling vehicle (201,301) in a second direction (Y) which is perpendicular to the first direction (X), the first and second sets of parallel rails (710,711) dividing the rail system (708) into a plurality of grid cells (722).
Clause 16. The distribution system (800) according to any of clauses 13 to 15, wherein the first rail system (608) of the dock (400) and the second rail system (708) of the at least one mobile storage system (701,702,703) are of the same gauge and when interconnected by the tracks of the at least one interface (609) form an operating area (OA) for the at least one container handling vehicle (201,301), wherein the operating area (OA) comprises a mobile storage area (MA) and a distribution area (DA), and wherein the distribution area (DA) is smaller than the mobile storage area (MA) of the at least one mobile storage system (701,702,703).
Clause 17. The distribution system (800) according to any of clauses 13-16, wherein the dock (400) of the distribution dock (1000) comprises fewer storage spaces for storing containers (106) than any one of the at least one mobile storage system (701,702,703).
Clause 18. The distribution system (800) according to any of clauses 13-17, wherein the first rail system (608) is supported by the dock (400) at a level which corresponds to a level of the second rail system (708) of the at least one mobile storage system (701,702,703) and the tracks of the at least one interface (609) extend in a substantially horizontal direction from either the first rail system (608) to the second rail system (708), or from the second rail system (708) to the first rail system (608) to link rails of the first rail system (608) to rails of the second rail system (708).
Clause 19. The distribution system (800) as described in any of clauses 13 to 17, wherein a face of the dock (400) and a face of the at least one mobile storage system (701,702,703) linked by the interface (609) correspond in width such that the first rail system (608) comprises the same number of rows of rails that are parallel to the tracks of the interface (609) as the number of rows of rails of the second rail system (708) which are parallel to the tracks of the interface (609).
Clause 20. The distribution system (800) as described in any of clauses 13 to 19, wherein the distribution dock (1000) comprises at least two separate interfaces (609) configured to connect the first rail system (608) to at least two separate second rail systems (708) of at least two mobile storage systems (701,702,703).
Clause 21. The distribution system (800) as described in any of clauses 13 to 19, wherein a first mobile storage system (701,702,703) comprises an interface (609) configured to connect it's second rail system (708) to the first rail system (608) and a second mobile storage system (701,702,703) comprises an interface (609) configured to connect it's second rail system (708) to the second rail system (708) of the first mobile storage system (701,702,703).
Clause 22. A method of operating a distribution system (800) according to any of clauses 13-21, comprising the steps of:
   - arranging at least one mobile storage system (701,702,703) at a predetermined distance to the first rail system (608) of the dock (400),
   - connecting the second rail system (708) of the mobile storage system (701,702,703) and the first rail system (608) using the at least one interface (609) such that the at least one container handling vehicle (201,301) can retrieve storage containers (106) from the mobile storage system (701,702,703).
Clauses 23. The method of operating a distribution system (800) according to clause 22, comprising the steps of:
   - arranging a second mobile storage system (701,702,703) at a predetermined distance to the first rail system (608),
   - connecting the second rail system (708) of the second mobile storage system (701,702,703) and the first rail system (608) using a second interface (609) such that the at least one container handling vehicle (201,301) can operate on and between the first rail system (608) and the mobile storage systems (701,702,703),
   - transferring storage containers (106) between the at least two mobile storage systems (701,702,703) using the at least one container handling vehicle (201,301).
Clause 24. The method of operating a distribution system (800) according to clause 23 comprising the steps of:
   - arranging a second mobile storage system (701,702,703) at a predetermined distance to the first mobile storage system (701,702,703),
   - connecting the second rail system (708) of the second mobile storage system (701,702,703) with the second rail system (608) of the first mobile storage system using an interface (609) arranged on either the first or second mobile storage system (701,702,703) such that the at least one container handling vehicle (201,301) can operate on and between the first rail system (608) and the second rail systems (708) of the mobile storage systems (701,702,703),
   - transferring storage containers (106) between the at least two mobile storage systems (701,702,703) using the at least one container handling vehicle (201,301).
Clause 25. The method of operating the distribution system (800) according to any of clauses 13-24, wherein the method comprises the steps of:
   - providing information to a local control unit (500) regarding the size, layout and placement of storage containers in the at least one mobile storage system (701,702,703),
   - providing information to the local control unit (500) regarding the reallocation of storage containers (106) in the at least one mobile storage system (701,702,703).
Clause 26. The method of operating a distribution system (800) according to clause 25, comprising the step of:
   - using the local control unit (500) to process said information and generate orders to the containers handling vehicles to move the storage containers accordingly.
   - determining, using the local control unit (500), which storage containers (106) to transfer between the first storage system (701,702,703) and the dock (400) and/or between the at least two mobile storage systems (701,702,703).

## Claims

1. A distribution dock (1000) comprising:
- a dock (400) for handling and providing access to storage containers (106) of a mobile storage system (701,702,703), the dock (400) comprising a framework structure (403) of upright members (404) and a first rail system (608) arranged on the upright members (404) of the framework structure (403) comprising a set of parallel rails (410,411) arranged to guide movement of a container handling vehicle (201,301) in a direction (X,Y) across the top of the framework structure (403),
- at least one container handling vehicle (201,301) configured to operate on the first rail system (608),
- at least one interface (609) comprising a set of parallel tracks configured to connect the first rail system (608) of the dock (400) to a second rail system (708) of a mobile storage system (701,702,703) such that the container handling vehicle (201,301) can retrieve storage containers (106) from the mobile storage system (701,702,703).

2. The distribution dock (1000) according to claim 1, wherein the first rail system (608) comprises a grid of a first set of parallel rails (410) arranged to guide movement of the at least one container handling vehicle (201,301) in a first direction (X) across the top of the framework structure(404), and a second set of parallel rails (411) arranged perpendicular to the first set of rails (110) to guide movement of the at least one container handling vehicle (201,301) in a second direction (Y) which is perpendicular to the first direction (X), the first and second sets of parallel rails (410,411) dividing the first rail system (608) into a plurality of grid cells (422).

3. The distribution dock (1000) according to claim 1 or 2, wherein the first rail system (608) comprises two interfaces (609) for connecting the first rail system (608) to two different mobile storage systems (701,702,703).

4. The distribution dock (1000) according to claim 1, 2 or 3, wherein the dock (400) is an island within the distribution dock (1000) comprising the framework structure (404) to define columns (405) configured to receive storage containers (106) from the at least one container handling vehicle (201,301);
optionally, wherein at least some of the columns (405) are available for use as storage columns (405) for stacks of the storage containers (106);
optionally, wherein the dock (400) comprises no more than twelve columns (405) in a direction of the tracks of the interface (609).

5. The distribution dock (1000) according to any one of the preceding claims, wherein the dock (400) comprises an access station (401) arranged at a level below a level of the first rail system (608) for allowing access to a storage container (106) delivered to the access station (401) by the at least one container handling vehicle (201,301).

6. The distribution dock (1000) according to any one of the preceding claims, wherein the interface (609) comprises a protruding male part provided with tracks for the at least one container handling vehicle (201,301) to move along, wherein the protruding male part is configured to connect to the second rail system (708) via a receiving female part comprising a recess, which receiving female part is provided on the second rail system (708);
optionally, wherein the protruding male part comprises a gang plank hinged to the dock (400) that is provided with tracks for the at least one container handling vehicle (201,301) to move along.

7. The distribution dock (1000) according to any one of claims 1 to 5, wherein the interface (609) comprises a receiving female part comprising a recess, wherein the receiving female part is configured to connect with a protruding male part provided with tracks for the at least one container handling vehicle (201,301), which protruding male part is provided on the second rail system (708).

8. A distribution system (800) comprising a distribution dock (1000) according to any one of the preceding claims, and at least one mobile storage system (701,702,703).

9. The distribution system (800) according to claim 8, wherein the at least one mobile storage system (701,702,703) is a vehicular mobile storage system (701,702,703), optionally a lorry trailer mounted storage system.

10. The distribution system (800) according to claim 8 or 9, wherein the at least one mobile storage system (701,702,703) comprises a framework structure (700) comprising upright members (704) defining multiple storage columns (705), in which storage containers (106) can be stored one on top of another in vertical stacks (707) and the second rail system (708) comprises a grid of a first set of parallel rails (710) arranged to guide movement of the at least one container handling vehicle (201,301) in a first direction (X) across the top of the framework structure (700), and a second set of parallel rails (711) arranged perpendicular to the first set of rails (710) to guide movement of the at least one container handling vehicle (201,301) in a second direction (Y) which is perpendicular to the first direction (X), the first and second sets of parallel rails (710,711) dividing the rail system (708) into a plurality of grid cells (722).

11. The distribution system (800) according to claim 8, 9 or 10, wherein the first rail system (608) of the dock (400) and the second rail system (708) of the at least one mobile storage system (701,702,703) are of the same gauge and when interconnected by the tracks of the at least one interface (609) form an operating area (OA) for the at least one container handling vehicle (201,301), wherein the operating area (OA) comprises a mobile storage area (MA) and a distribution area (DA), and wherein the distribution area (DA) is smaller than the mobile storage area (MA) of the at least one mobile storage system (701,702,703).

12. The distribution system (800) according to any one of claims 8 to 11, wherein the dock (400) of the distribution dock (1000) comprises fewer storage spaces for storing containers (106) than any one of the at least one mobile storage system (701,702,703).

13. The distribution system (800) according to any one of claims 8 to 12, wherein the first rail system (608) is supported by the dock (400) at a level which corresponds to a level of the second rail system (708) of the at least one mobile storage system (701,702,703) and the tracks of the at least one interface (609) extend in a substantially horizontal direction from either the first rail system (608) to the second rail system (708), or from the second rail system (708) to the first rail system (608) to link rails of the first rail system (608) to rails of the second rail system (708).

14. The distribution system (800) according to any one of claims 8 to 13, wherein a face of the dock (400) and a face of the at least one mobile storage system (701,702,703) linked by the interface (609) correspond in width such that the first rail system (608) comprises the same number of rows of rails that are parallel to the tracks of the interface (609) as the number of rows of rails of the second rail system (708) which are parallel to the tracks of the interface (609).

15. The distribution system (800) according to any one of claims 8 to 14, wherein the distribution dock (1000) comprises at least two separate interfaces (609) configured to connect the first rail system (608) to at least two separate second rail systems (708) of at least two mobile storage systems (701,702,703); or,
wherein a first mobile storage system (701,702,703) comprises an interface (609) configured to connect its second rail system (708) to the first rail system (608) and a second mobile storage system (701,702,703) comprises an interface (609) configured to connect its second rail system (708) to the second rail system (708) of the first mobile storage system (701,702,703).

16. A method of operating a distribution system (800) according to any one of claims 8 to 15, the method comprising the steps of:
- arranging at least one mobile storage system (701,702,703) at a predetermined distance to the first rail system (608) of the dock (400),
- connecting the second rail system (708) of the mobile storage system (701,702,703) and the first rail system (608) using the at least one interface (609) such that the at least one container handling vehicle (201,301) can retrieve storage containers (106) from the mobile storage system (701,702,703).
